# EUROPÄISCHE PATENTSCHRIFT

(11) **EP 1 706 648 B1**
(45) Veröffentlichungstag und Bekanntmachung des Hinweises auf die Patenterteilung: **23.04.2008**
(21) Anmeldenummer: 04802702.3
(22) Anmeldetag: 10.11.2004
(51) Int. Cl.: F15B 11/032, B29C 45/82

(54) **ANTRIEBSVORRICHTUNG**
DRIVE MECHANISM
DISPOSITIF D'ENTRAINEMENT

(30) Priorität: 25.11.2003 DE 10354952
(43) Veröffentlichungstag der Anmeldung: 04.10.2006
(73) Patentinhaber: Bosch Rexroth AG, 70184 Stuttgart (DE)
(72) Erfinder: DANTLGRABER, Jörg, 97816 Lohr am Main (DE)
(74) Vertreter: Winter, Konrad Theodor
(86) Internationale Anmeldenummer: PCT/DE2004/002485
(87) Internationale Veröffentlichungsnummer: WO 2005/052382

(56) Entgegenhaltungen:
- EP-A- 1 310 346
- DE-A1- 10 135 516
- DE-A1- 10 143 013
- GB-A- 2 053 364
- US-A- 4 181 003

## Beschreibung

Die Erfindung betrifft eine Antriebsvorrichtung nach dem Oberbegriff des Patentanspruchs 1.

Derartige elektromechanisch-hydraulische Antriebsvorrichtungen werden bei Arbeitsmaschinen eingesetzt, bei denen schnelle Stellbewegungen und hohe Kräfte zu realisieren sind. Bevorzugte Arbeitsmaschinen sind Stanzmaschinen, Nibbelmaschinen, Pressen und Kunststoffspritzgießmaschinen.

Eine derartige Vorrichtung ist in EP 1 310 346 offenbart.

Eine Antriebsvorrichtung für Kunststoffspritzgießmaschinen ist in der DE 101 35 516 A1 der Anmelderin offenbart. Die Antriebsvorrichtung hat einen hydraulischen Kraftübersetzer, der über Druckleitungen mit einer hydraulischen Stelleinrichtung einer Formspannplatte verbunden ist. Der Kraftübersetzter hat eine primäre und eine sekundäre Kolben-Zylindereinheit mit einem kleinen Primärkolben und einem großen Sekundärkolben. Die beiden Kolben-Zylindereinheiten sind ineinander verschachtelt angeordnet, wobei der Primärkolben über einen elektrischen Spindelantrieb verfahren und somit die Formspannplatte verfahren werden kann. Zur Einstellung einer Nulllage der Antriebsvorrichtung, z.B. in Folge von Leckage, wird die Formspannplatte gegen einen mechanischen Anschlag in eine vollständig geöffnete Position gefahren. Anschließend wird über ein Ventil eine Druckmittelverbindung zwischen der Stelleinrichtung und dem Kraftübersetzter aufgesteuert und der Sekundärkolben in eine der geöffneten Position der Formspannplatte entsprechende Position verfahren. Nach der Justierung der Nulllage wird das Ventil wieder in seine Sperrstellung gebracht und ein neuer Arbeitszyklus kann beginnen.

Nachteilig an dieser bekannten Lösung ist, daß die Einstellung der Nullage sehr zeitintensiv ist. Des Weiteren ist nachteilig, daß mit dem bekannten Kraftübersetzer keine hohe Dynamik der Antriebsvorrichtung, wie bei Stanz- oder Nibbelmaschinen gefordert, realisierbar ist.

Aufgabe der vorliegenden Erfindung ist es, eine Antriebsvorrichtung schaffen, die die vorgenannten Nachteile beseitigt.

Diese Aufgabe wird gelöst durch eine Antriebsvorrichtung mit den Merkmalen nach dem Patentanspruch 1.

Die erfindungsgemäße Antriebsvorrichtung hat einen Kraftübersetzer und einen Spindelantrieb. Der Kraftübersetzer hat eine Primäreinheit und eine Sekundäreinheit mit jeweils einem Differentialkolben. Die Einheiten sind so angeordnet, daß die großen Wirkflächen der Kolben gemeinsam einen Zylinderraum und die kleinen Wirkflächen der Kolben je einen Ringraum begrenzen, wobei die Ringräume hydraulisch miteinander in Verbindung stehen. Der Primärkolben ist über den Spindelantrieb antreibbar. Der Sekundärkolben wirkt mittel- oder unmittelbar auf ein Werkstück. Erfindungsgemäß ist eine Vorspanneinrichtung zum Beaufschlagen des Zylinderraums mit einem Vorspanndruck vorgesehen, über den die in Kraftaufbaurichtung wirksame Druckdifferenz erhöht ist.

Vorteilhaft an der erfindungsgemäßen Antriebsvorrichtung ist, daß sie eine hohe Dynamik hat, da durch die Vorspannung die in Kraftaufbaurichtung wirksame Druckdifferenz erhöht ist.

Die Vorspanneinrichtung ist über ein Vorspannventil zu- und abschaltbar. Sie kann eine Pumpe und/oder ein Hydrospeicher sein. Zum Speisen des Hydrospeichers ist eine Füllpumpe einsetzbar, die beispielsweise von der Sekundäreinheit angetrieben wird, so daß Druckmittel aus einem Tank nachgefördert und der Hydrospeicher aufgeladen werden kann. Vorteilhafterweise ist die Füllpumpe als Plungerpumpe mit einem Tauchkolben ausgeführt, wobei ein Druck am Sekundärkolben über eine Feder an dem Tauchkolben anliegt, so daß die Füllpumpe ab einem bestimmten Grenzdruck den Hydrospeicher nicht weiter auflädt. Als Druckmittel kann Wasser verwendet werden.

Der Ringraum der Primärkolbeneinheit und der Ringraum der Seltundärkolbeneinheit stehen über eine Druckleitung in hydraulischer Verbindung. In der Druckleitung ist gemäß einem Ausführungsbeispiel ein Justierventil zum Auf- und Zusteuern dieser hydraulischen Verbindung vorgesehen. Dieses Justierventil wird bei einer Nulllagenjustierung der Antriebsvorrichtung in Sperrstellung gebracht und der Sekundärkolben somit hydraulisch festgesetzt, während es sonst in Durchgangsstellung und der Sekundärkolben somit verfahrbar ist. Zur Bestimmung der richtig eingestellten Nulllage und zur Bestimmung, ob die Nulllage neu einzustellen ist, ist ein Weg- und/oder ein Druckmeßsystem vorgesehen, das den Abstand der beiden Differentialkolben zueinander und/oder den Druck, vorrangig im Zylinderraum, erfaßt.

Des Weiteren steht der Ringraum der Primärkolbeneinheit mit dem Zylinderraum in hydraulischer Verbindung. Diese Verbindung ist ebenfalls über ein Ventil, im Folgenden Verdrängerventil genannt, auf- und zusteuerbar. Somit kann Druckmittel von dem einen Raum in den anderen Raum verdrängt und der Primärkolben bspw. bei stillstehendem Sekundärkolben in eine Nulllagenposition gefahren werden.

Zur Steigerung der Kraft, mit der der Sekundärkolben mittelbar oder unmittelbar ein Werkstück beaufschlagt, können mehrere Primäreinheiten synchron betrieben werden. Dabei kann jeweils ein Spindelantrieb einer Primäreinheit zugeordnet sein oder ein Spindelantrieb treibt über ein Getriebe mehrere Spindeln an. Grundsätzlich ist an mehreren, unabhängig voneinander anstehenden Primärkolben vorteilhaft, daß die einzelnen Eingriffspositionen der mit den Primärkolben verbundenen Spindeln/Spindelmuttern geändert werden kann und somit die Lebensdauer der Spindeln verlängerbar ist.

Um eine möglichst kompakte Bauform der Antriebsvorrichtung zu erhalten, kann das Zylindergehäuse der Primäreinheit von dem Zylindergehäuse der Sekundäreinheit umgriffen sein. Diese Bauform läßt sich noch kompakter ausführen, wenn die Primäreinheit zumindest mit einem Endabschnitt in den Sekundärkolben eintaucht.

Sonstige vorteilhafte Ausführungsformen sind Gegenstand weiterer Unteransprüche.

Im Folgenden erfolgt eine ausführliche Erläuterung bevorzugter Ausführungsformen der Erfindung anhand schematischer Darstellungen. Es zeigen
Figur 1 eine erfindungsgemäße Antriebsvorrichtung mit einem Hydrospeicher zur Vorspannung und
Figur 2 einen Kraftübersetzer mit einem in einer Sekundäreinheit aufgenommenen Primäreinheit.

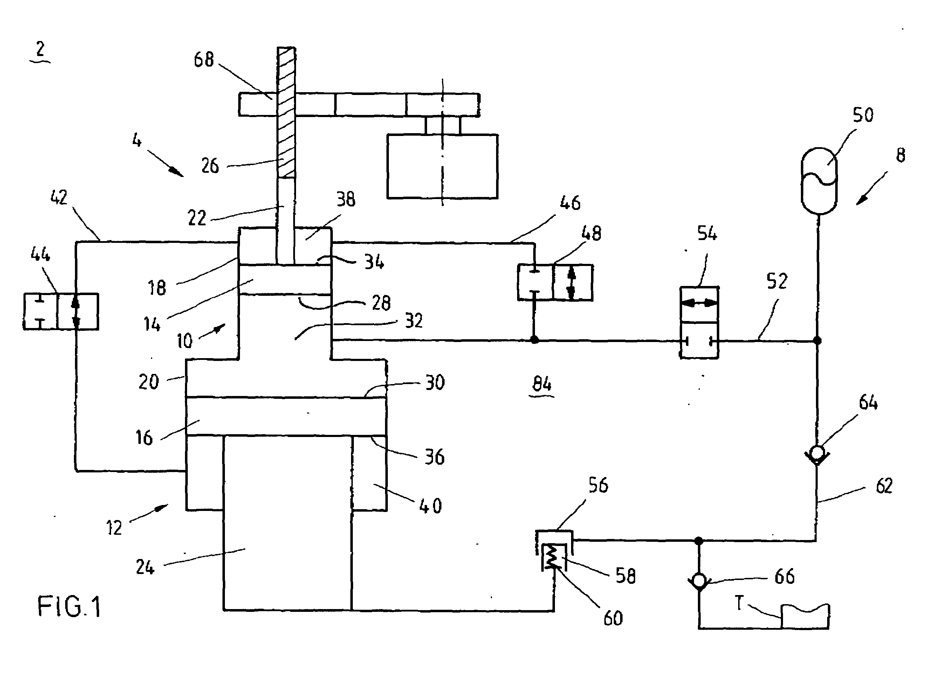

Figur 1 zeigt eine bevorzugte erfindungsgemäße Antriebsvorrichtung 2, insbesondere zum Antreiben von Stanz-, oder Nibbelmaschinen, mit einem Kraftübersetzer 4, einem Spindelantrieb 6 und einer Vorspanneinrichtung 8 zum Vorspannen des Kraftübersetzers 4.

Der Kraftübersetzer 4 hat eine Primäreinheit 10 und eine Sekundäreinheit 12. Beide Einheiten 10, 12 weisen jeweils einen in einem Zylindergehäuse 18, 20 aufgenommenen und als Differentialkolben ausgeführten Primär- bzw. Sekundärkolben 14, 16 auf. Die Kolben 14, 16 haben jeweils eine Kolbenstange 22, 24, die stirnseitig die Zylindergehäuse 18, 20 durchsetzen. An der Kolbenstange 22 der Primäreinheit 10 greift eine Spindel 26 an, die mit einer Spindelmutter 68 des Spindelantriebs 6 zum Antreiben des Kraftübersetzers 4 im Wirkeingriff steht. Die Kolbenstange 24 der Sekundäreinheit 12 ist bspw. mit einem zu bearbeitenden Werkstück (nicht dargestellt) mittel- oder unmittelbar in Anlage bringbar, so daß das Werkstück mit einer hohen Kraft beaufschlagt werden kann.

Zur Bestimmung eines Abstandes der beiden Kolben 14, 16 zueinander und/oder zur Messung eines Drucks im Zylinderraum 32 ist ein Weg- und/oder ein Druckmeßsystem (nicht dargestellt) vorgesehen. Mit Hilfe des gemessenen Abstands und/oder Drucks kann eine Änderung der Relativlage der Kolben 14, 16 und/oder eine Änderung des Drucks im Zylinderraum 32 bestimmt werden, so daß ein eventuelles Auseinanderdriften der Kolben 14, 16 erfaßbar ist. Ein Auseinanderdriften der Kolben 14, 16 tritt z.B. in Folge von einer Leckage nach innen auf, bei der Druckmittel aus den mit einem höheren Druck beaufschlagten Ringräumen 38, 40 über die Kolben 14, 16 in den Zylinderraum 32 strömt. Des Weiteren läßt sich über den von dem Wegmeßsystem erfaßten Relativabstand der beiden Kolben 14, 16 einfach eine Nulllagenjustierung der Antriebsvorrichtung 2 durchführen. Eine ausführlichere Beschreibung der Justierung der Nulllage erfolgt bei der allgemeinen Funktionsbeschreibung des dargestellten Ausführungsbeispiels der erfindungsgemäßen Antriebsvorrichtung 2.

Bei der Ausführungsform nach Figur 1 ist nur eine Primäreinheit 10 vorgesehen, jedoch können auch mehrere Primäreinheiten 10 auf einen Sekundärkolben 16 wirken. Sind mehrere Primäreinheiten 10 vorgesehen, so kann jedem der Primäreinheiten 10 ein eigener Spindelantrieb 6 zugeordnet sein. Eine andere Alternative sieht einen Spindelantrieb 6 für sämtliche Primäreinheiten 10 vor, der z.B über ein Getriebe in Wirkverbindung mit den einzelnen Primärkolben 14 steht. An mehreren auf einen Sekundärkolben 16 wirkenden Primärkolben 14 ist vorteilhaft, daß die Eingriffsposition der einzelnen Spindeln 26 mit den Spindelmuttern 68 der Spindelantriebe 6 geändert werden kann. D.h. bspw., daß der Abstand des Primärkolbens 14 durch Verfahren des Spindelantriebs 6 zum Sekundärkolben 16 verringert wird, während der Abstand eines zweiten Primärkolbens entsprechend vergrößert wird, so daß wechselnde Spindelabschnitte im Eingriff sind bzw. unter Belastung stehen und eine gleichmäßigere Abnutzung des Spindelgewindes 26 erfolgen kann.

Die Kolben 14, 16 haben jeweils eine große und eine kleine Wirkfläche 28, 30, 34, 36. Die großen Wirkflächen 28, 30 begrenzen einen Zylinderraum 32 und die kleinen Wirkflächen 34, 36 begrenzen je einen Ringraum 38, 40. Von den kleinen Wirkflächen 34, 36 erstrecken sich die Kolbenstangen 22, 24, so daß die kleinen Wirkflächen 34, 36 um die Querschnittsfläche der jeweiligen Kolbenstange 22, 24 gegenüber den großen Wirkflächen verkleinert sind.

Die Ringräume 38, 40 stehen über eine Druckleitung 42 miteinander in hydraulischer Verbindung, wobei zur Unterbrechung dieser Verbindung ein Justierventil 44 mit einer Durchgangs- und einer Sperrstellung in der Druckleitung 42 angeordnet ist.

Der Zylinderraum 32 steht über eine Zylinderleitung 46 mit dem Ringraum 38 der Primäreinheit 10 in hydraulischer Verbindung. Zum Zu- und Aufsteuern dieser Verbindung ist auch in dieser Zylinderleitung 46 ein Vorspannventil 48 mit einer Durchgangs- und einer Sperrstellung vorgesehen.

Die Vorspanneinrichtung 8 des Kraftübersetzers 4 ist bei dem dargestellten Ausführungsbeispiel ein Hydrospeicher 50. Dieser steht über eine Speicherleitung 52 mit dem Zylinderraum 32 in hydraulischer Verbindung, wobei zur Herstellung bzw. Unterbechung dieser hydraulischen Verbindung ein Vorspannventil 54 mit einer Durchgangs- und einer Sperrstellung in der Speicherleitung 52 vorgesehen ist.

Zum Ausgleich einer Leckage nach außen, die sich dort einstellt, wo die Kolbenstange 22, 24 die Zylindergehäuse 18, 20 durchsetzen, ist eine Füllpumpe 56 vorgesehen, die Druckmittel über eine Tankleitung 62, die in die Speicherleitung 52 mündet, aus einem Tank T in das hydraulische System fördert und somit den Hydrospeicher 50 lädt. Die Füllpumpe 56 ist vorzugsweise als Plungerpumpe mit einem Tauchkolben 58 ausgebildet, wobei sie mit dem Sekundärkolben 16 mechanisch oder hydraulisch in Wirkverbindug steht und in Abhängigkeit von dessen Hub angetrieben wird und Druckmittel in das hydraulische System fördert. Die Bewegung des Sekundärkolbens 16 wird über eine Feder 60 auf den Tauchkolben 58 übetragen. Deren Federrate ist so ausgelegt, daß auf den Tauchkolben 58 nur eine Kraft übertragen werden kann, die dem maximalen Ladedruck des Hydrospeichers 50 entspricht. Bei überschreiten dieser Kraft wird die Feder 60 zusammengedrückt, so daß am Hydrospeicher 50 keine Druckerhöhung auftritt. Um ein Rückströmen von Druckmittel in Richtung der Füllpumpe 56 bzw. in den Tank T zu verhindern, ist in der Tankleitung 62 und unmittelbar vor dem Tank T jeweils ein Rückschlagventil 64, 66 angeordnet.

Die Funktionsweise der erfindungsgemäßen Antriebsvorrichtung 2 ist im Folgenden beschrieben. Die Funktionsweise bzw. ein Arbeitszyklus unterteilt sich im wesentlichen in ein Vorspannen, ein Zustellen des Sekundärkolbens 16 aus einer Grundposition, ein Stanzen und in ein Zurückfahren des Sekundärkolbens 16 in die Grundposition. Je nach Leckageverlust ist nach einer Vielzahl von Arbeitszyklen eine Nulllagenjustierung zum Einstellen der Grundposition durchzuführen.

Zu Beginn eines Arbeitszyklusses befindet sich die Antriebsvorrichtung 2 in einer Grundposition. In dieser Position sind die Kolben 14, 16 in einem definierten Abstand zueinander eingestellt. Die Antriebsvorrichtung 2 ist in ihrer Nulllage justiert.

Die Antriebsvorrichtung 2 wird in dieser Grundposition erfindungsgemäß vorgespannt. Dabei sind das Justierventil 44 und das Vorspannventil 54 geöffnet und das Verdrängerventil 48 ist geschlossen. Durch die Öffnung des Justierventils 44 stehen die beiden Ringräume 38, 40 in Verbindung miteinander, so daß Druckausgleich zwischen diesen Räumen 38, 40 herrscht. Über den Hydrospeicher 50 wird der Zylinderraum 32 mit einem Vorspanndruck beaufschlagt, der an den großen Wirkflächen 28, 30 des Primärkolbens 14 und des Sekundärkolbens 16 anliegt. Da der Primärkolben 14 jedoch über den Wirkeingriff der Spindel 26 mit der Spindelmutter 68 des Spindelantriebs 6 in seiner Lage fixiert ist und somit auch das Volumen des Ringraums 38 nicht vergrößert werden kann, kann der Sekundärkolben 16 nicht aus seiner momentanen Position bewegt werden. Folglich baut sich über den Hydrospeicher 50 ein Vorspanndruck im Zylinderraum 32 auf. Sobald der entsprechende Vorspanndruck im Zylinderraum 32 herrscht, wird das Vorspannventil 54 geschlossen und der Hydrospeicher 50 gegenüber dem Zylinderraum 32 abgesperrt.

Beim Zustellen nach dem Vorspannen wird der Sekundärkolben 16 mittel- oder unmittelbar in Anlage mit einem zu bearbeitenden Werkstück gebracht. Das Verdrängerventil 48 und das Vorspannventil 54 sind geschlossen und das Justierventil 44 ist geöffnet. Der Spindelantrieb 6 wird angesteuert und die Spindel 26 führt eine Drehbewegung aus, so daß der Primärkolben 14 einfährt. Der Sekundärkolben 16 fährt entsprechend dem Primärkolben 14 aus und Druckmittel wird aus dem Ringraum 40 der Sekundäreinheit 12 in den Ringraum 38 der Primäreinheit 10 über die Druckleitung 42 verdrängt. Die Volumenverhältnisse der Ringräume 38, 40 sind so gewählt, daß die Volumenvergößerung des Ringraums 38 der Primäreinheit 10 der Volumenverkleinerung des Ringraums 40 der Sekundäreinheit 12 entspricht - der Sekundärkolben 16 senkt sich in Richtung auf das Werkstück ab.

Beim Stanzen bleiben das Verdrängerventil 48 und das Vorspannventil 54 geschlossen und das Justierventil 44 bleibt geöffnet. Der Spindelantrieb 6 ist angesteuert und die Spindel 26 führt eine Drehbewegung aus, die den Primärkolben 14 weiter einfährt. Da der Sekundärkolben 16 jedoch beim Zustellen mittel- oder unmittelbar in Anlage mit dem zu bearbeitenden Werkstück gebracht worden ist, ist der Sekundärkolben 16 an einem sofortigen Ausfahren gehindert. Folglich wird das sich im Zylinderraum 32 befindliche Druckmittel, soweit es seine Kompressibilität zuläßt, komprimiert. Der Zylinderraum 32 verkleinert sich entsprechend und der Ringraum 38 der Primäreinheit wird vergrößert, so daß der Druck im Zylinderraum 32 über den Vorspanndruck ansteigt und der Druck in den Ringräumen 38, 40 fällt. Somit steigt die in Richtung der aufzubringenden Stanzkraft wirksame Druckdifferenz. Ab einem bestimmten Druck im Zylinderraum 32 kann der Sekundärkolben 16 die zum Stanzen erforderliche Kraft entwickeln. Diese Stanzkraft wird durch die Vorspannung sehr schnell aufgebaut, so daß der Stanzvorgang mit hoher Dynamik erfolgt. Nach dem Stanzen und dem Ausfahren des Sekundärkolbens 16 stellt sich im Zylinderraum 32 wieder der Vorspanndruck ein.

Beim Zurückfahren des Sekundärkolbens 16 in seine Grundposition zum Durchführen eines neuen Arbeitszyklusses sind das Verdrängerventil 48 und das Vorspannventil 54 in Sperrstellung und das Justierventil 44 ist geöffnet. Der Spindelantrieb 6 wird so angesteuert, daß die Spindel 26 eine entgegengesetzte Drehbewegung ausführt, wobei der Primärkolben 34 ausgefahren wird. Der Ringraum 38 der Primäreinheit 10 verkleinert sich und das Druckmittel wird über das Justierventil 44 in den Ringraum 40 der Sekundäreinheit 12 verdrängt. Der Ringraum 40 vergrößert sich entsprechend und bewegt den Sekundärkolben 16 in eine einfahrende Richtung. Dabei wird der Sekundärkolben 16 aufgrund des schnell zurückfahrenden Primärkolbens 14 in seine Ausgangslage überführt, so daß schnell ein neuer Arbeitszyklus beginnen kann.

Je nach Relativposition der beiden Kolben 14, 16 und/oder dem im Zylinderraum 32 herrschenden Druck ist nach einigen Arbeitszyklen eine Justierung der Nulllage der Antriebsvorrichtung 2 vorzunehmen. Dabei werden die Kolben 14, 16 wieder in ihre definierte relative Lage zueinander gebracht. Die Veränderung der Relativlage der beiden Kolben 14, 16 zueinander und/oder des Drucks im Zylinderraum 32 stellt sich vorrangig wegen Leckagen ein.

Leckagen können aufgrund von einer inneren und einer äußeren Leckage auftreten. Bei einer inneren Leckage dringt Druckmittel aus den Ringräumen 38, 40 über die Kolben 14, 16 in den Zylinderraum 32 ein. Bei einer äußeren Leckage dringt Druckmittel im Bereich der Kolbenstangen 22, 24 aus den Ringräumen 38, 40 in die Außenumgebung 84 nach außen aus.

Die innerer Leckage bzw. Leckage nach innen beruht im wesentlichen auf dem im Mittel höheren Druck in den Ringräumen 38, 40 im Vergleich zum Zylinderraum 32. Die Leckage nach innen bewirkt wegen des aus dem Ringräumen 38, 40 austretenden Druckmittels eine Verkleinerung des Ringraums 40 und eine Vergrößerung des Zylinderraums 32 und somit ein Absinken des Sekundärkolbens 16. Desweiteren sinkt der Druck im Zylinderraum 32 ab. Aufgrund der erfindungsgemäßen Vorspannung ist der Druck im Zylinderraum 32 jedoch auf ein derart hohes Niveau angehoben, daß sich kein Unterdruck im Zylinderraum 32 ausbilden kann.

Durch die Abgabe des Druckmittels bei der Leckage nach außen an die Außenumgebung 84 wird dem gesamten hydraulischen System Druckmittel entzogen, aufgrund dessen der Druck im System abfällt. Bis zu einer bestimmten Druckmittelmenge kann dieser Druckmittelverlust durch den Hydrospeicher 50 ausgeglichen werden. Um die Druck jedoch langfristig auf einem konstanten Niveau zu halten, kann über die Füllpumpe 56 bei einem Hub des Sekundärkolbens 16 Druckmittel aus einem Tank T in das hydraulische System nachgefördert und der Hydrospeicher 50 aufgeladen werden.

Zur Justierung der Nulllage nach einem Auseinanderdriften sind das Justierventil 44 und das Vorspannventil 54 in Sperrstellung und das Verdrängerventil 48 ist geöffnet. Durch die Sperrstellung des Justierventils 44 sind die Ringräume 38, 40 voneinander getrennt, so daß kein Druckmittel aus dem Ringraum 40 der Sekundäreinheit 12 in den Ringraum 38 der Primäreinheit 10 strömen kann. Der Sekundärkolben 16 ist hydraulisch in seiner Lage festgesetzt. Über das Wegmeßsystem wird der momentane Abstand der beiden Kolben 14, 16 zueinander erfaßt und der Spindelantrieb wird derart angesteuert, daß der vorbestimmte Relativabstand zwischen den Kolben 14, 16 eingestellt ist. Aufgrund des geöffneten Verdrängerventils 48 ist die Druckmittelverbindung zwischen dem Ringraum 38 der Primäreinheit 10 und dem Zylinderraum 32 hergestellt, so daß beim Verfahren des Primärkolben 14 in Richtung des Sekundärkolbens 16 zur Abstandsverringerung Druckmittel aus dem Zylinderraum 32 in den Ringraum 38 verdrängt werden kann. Ein zeitintensives Ausfahren des Sekundärkolbens 16 in eine geöffnete Position zur Nulllageneinstellung ist im Gegensatz zu bekannten Lösungen erfindungsgemäß somit nicht mehr notwendig. Die erfindungsgemäße Nulllagenjustierung kann quasi jederzeit schnell und einfach durchgeführt werden. Sobald der Sollabstand zwischen den beiden Kolben 14, 16 wieder eingestellt ist, befindet sich die Antriebsvorrichtung 2 in ihrer definierten Nulllage bzw. Grundstellung, so daß gegebenfalls nach einer nochmaligen Vorspannung des Systems neue Arbeitszyklen beginnen können. Eine derartige schnelle Nulllagenjustierung ist ebenso mit dem Druckmeßsystem durchführbar. In diesem Fall wird der Druck im Zylinderraum 32 gemessen und mit einem Solldruck verglichen.

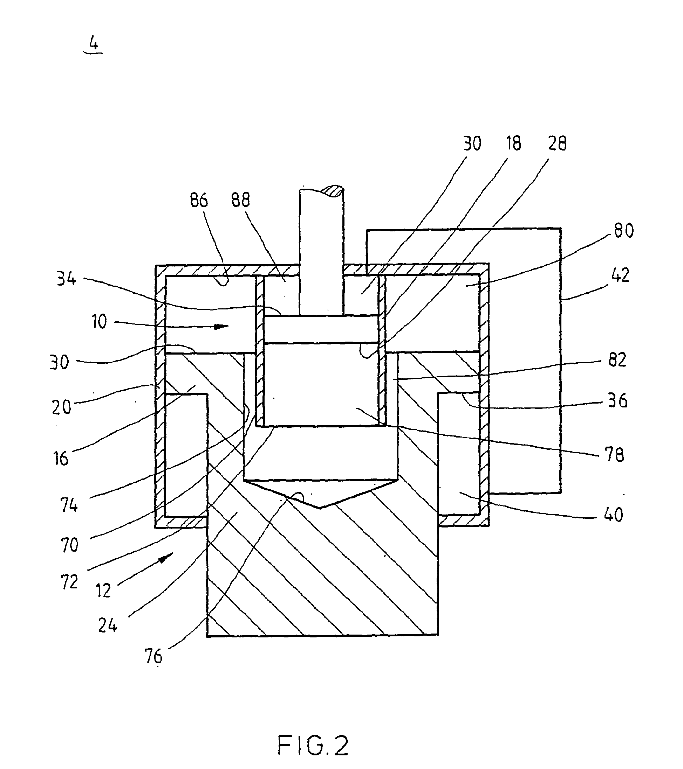

Figur 2 zeigt einen Kraftübersetzer 4 mit einer von einer Sekundäreinheit 12 umgriffenen Primäreinheit 10. Eine derartige Bauweise zeichnet sich aufgrund der reduzierten Axiallänge des Kraftübersetzers 4 durch eine große Kompaktheit aus.

Der Sekundärkolben 16 hat eine Ausnehmung 70, die in dem Bereich der großen Wirkfläche 30 eingebracht ist und sich bei dieser Ausführungsform in seine Kolbenstange 24, d.h. in den Endabschnitt mit geringem Außendurchmesser, erstreckt. In die Ausnehmung 70 taucht die Primäreinheit 10 mit einem Endabschnitt 72 ihres Zylindergehäuses 18 ein. Mit einem zweiten Endabschnitt 88 ihres Zylindergehäuses 18 ist die Primäreinheit 10 am Boden 86 des Zylindergehäuses 20 der Sekundäreinheit 12 befestigt. Das Zylindergehäuse 18 der Primäreinheit 10 ist vom Innenumfang 74 und vom Boden 76 der Ausnehmung 70 beabstandet, so daß über einen Ringspalt 82 eine hydraulische Verbindung zwischen einem Zylinderraum 78 der Primäreinheit 10 und einem Zylinderraum 80 der Sekundäreinheit hergestellt ist und somit die großen Wirkflächen 28, 30 der beiden Kolben 14, 16 mit dem gleichen Druck beaufschlagt sind. Die beiden Zylinderräume 78, 80 entsprechen dem Zylinderraum 32 der vorherigen Ausführungsform gemäß Figur 1. Die Ringräume 38, 40 der Primär- und der Sekundäreinheit 10, 12 werden axial von den kleinen Wirkflächen 34, 36 begrenzt und stehen über eine Druckleitung 42 in hydraulischer Verbindung miteinander. Entsprechend der vorbeschriebenen Ausführungsform gemäß Figur 1 ist in dieser Druckleitung 42 ein Ventil (nicht dargestellt) zum Auf- und Zusteuern dieser Druckmittelverbindung zwischen den Ringräumen 38, 40 angeordnet.

Die Funktionsweise entspricht der der vorbeschriebenen Ausführungsform gemäß Figur 1, so daß auf eine erneute Erläuterung verzichtet wird.

Offenbart ist eine Antriebsvorrichtung, insbesondere für Stanz- und Nibbelmaschinen, mit einem hydraulischen Kraftübersetzer und einem Spindelantrieb zum Antreiben des Kraftübersetzers, wobei eine Vorspanneinrichtung zum Vorspannen des Kraftübersetzers vorgesehen ist.

### Bezugszeichenliste

- 2: Antriebsvorrichtung
- 4: Kraftübersetzer
- 6: Spindelantrieb
- 8: Einrichtung zum Vorspannen
- 10: Primäreinheit
- 12: Sekundäreinheit
- 14: Primärkolben
- 16: Sekundärkolben
- 18: Zylindergehäuse
- 20: Zylindergehäuse
- 22: Kolbenstange
- 24: Kolbenstange
- 26: Spindel
- 28: große Wirkfläche
- 30: große Wirkfläche
- 32: Zylinderraum
- 34: kleine Wirkfläche
- 36: kleine Wirkfläche
- 38: Ringraum
- 40: Ringraum
- 42: Druckleitung
- 44: Justierventil
- 46: Zylinderleitung
- 48: Verdrängerventil
- 50: Hydrospeicher
- 52: Speicherleitung
- 54: Vorspannventil
- 56: Füllpumpe
- 58: Tauchkolben
- 60: Feder
- 62: Tankleitung
- 64: Rückschlagventil
- 66: Rückschlagventil
- 68: Spindelmutter
- 70: Ausnehmung
- 72: Endabschnitt
- 74: Innenumfang
- 76: Boden
- 78: Zylinderraum
- 80: Zylinderraum
- 82: Ringspalt
- 84: Außenumgebung
- 86: Boden
- 88: Endabschnitt

## Patentansprüche

1. Antriebsvorrichtung, insbesondere für eine Stanz- und Nibbelmaschine, mit einem hydraulischen Kraftübersetzer (4), der eine Primäreinheit (10) und eine Sekundäreinheit (12) hat, die mit Differentialkolben (14, 16) ausgeführt sind, deren großen Wirkflächen (28, 30) gemeinsam einen Zylinderraum (32) und deren kleinen Wirkflächen (34, 36) je einen Ringraum (38, 40) begrenzen, wobei die Ringräume (38, 40) hydraulisch verbunden sind, und mit einem Spindelantrieb (6) zum Antreiben des Primärkolbens, wobei der Sekundärkolben (16) mittelbar oder unmittelbar auf ein zu beaufschlagendes Werkstück wirkt, **gekennzeichnet durch** eine Vorspanneinrichtung (8) zum Beaufschlagen des Zylinderraums (32) mit einem Vorspanndruck, über den die in Kraftaufbaurichtung wirksame Druckdifferenz erhöht ist.

2. Antriebsvorrichtung nach Patentanspruch 1, **dadurch gekennzeichnet, daß** die Vorspanneinrichtung (8) über ein Vorspannventil (54) zu- und abschaltbar ist.

3. Antriebsvorrichtung nach Patentanspruch 1 oder 2, **dadurch gekennzeichnet, daß** die beiden Ringräume (38, 40) über eine Druckleitung (42) hydraulisch miteinander in Verbindung stehen, wobei in der Druckleitung ein Justierventil (44) zum Auf- und Zusteuern dieser hydraulischen Verbindung angeordnet ist.

4. Antriebsvorrichtung nach einem der Patentansprüche 1 bis 3, **dadurch gekennzeichnet, daß** ein Weg- und/oder Druckmeßsystem zum Erfassen einer Relativlage des Primär- und des Sekundärkolbens (14, 16) zueinander und/oder zum Erfassen eines Drucks im Zylinderraum (32) vorgesehen ist.

5. Antriebsvorrichtung nach einem der vorhergehenden Patentansprüche, **dadurch gekennzeichnet, daß** der Zylinderraum (32) mit dem Ringraum (38) der Primäreinheit (10) hydraulisch verbunden ist, wobei zum Auf- und Zusteuern dieser hydraulischen Verbindung ein Verdrängerventil (48) vorgesehen ist.

6. Antriebsvorrichtung nach einem der vorhergehenden Patentansprüche, **dadurch gekennzeichnet, daß** die Vorspanneinrichtung (8) ein Hydrospeicher (50) oder eine Pumpe ist.

7. Antriebsvorrichtung nach einem der vorhergehenden Patentansprüche, **dadurch gekennzeichnet, daß** eine Füllpumpe (56) zum Speisen des Hydrospeichers (50) vorgesehen ist, die vom Sekundärkolben (16) antreibbar ist.

8. Antriebsvorrichtung nach Patentanspruch 7, **dadurch gekennzeichnet, daß** ein Druck am Sekundärkolben (16) über eine Feder auf einen Tauchkolben (58) der Füllpumpe (56) wirkt.

9. Antriebsvorrichtung nach einem der vorhergehenden Patentansprüche, **dadurch gekennzeichnet, daß** mehrere Spindeln (26) parallel geschaltet sind.

10. Antriebsvorrichtung nach einem der vorhergehenden Patentansprüche, **dadurch gekennzeichnet, daß** das Zylindergehäuse (18) der Primäreinheit (10) vom Zylindergehäuse (20) der Sekundäreinheit (12) umgriffen ist.

11. Antriebsvorrichtung nach Patentanspruch 10, **dadurch gekennzeichnet, daß** ein Endabschnitt (72) des Zylindergehäuses (18) der Primäreinheit (10) in eine Ausnehmung (70) des Sekundärkolbens (16) eintaucht.

12. Antriebsvorrichtung nach einem der vorhergehenden Patentansprüche, **dadurch gekennzeichnet, daß** das Druckmittel Wasser ist.

## Claims

1. A drive mechanism, in particular for a blanking and nibbling machine, comprising a hydraulic force transmitting element (4) having a primary unit (10) and a secondary unit (12) that are executed with differential pistons (14, 16) whose large effective surfaces (28, 30) jointly define a cylinder chamber (32), and whose small effective surfaces (34, 36) each define one annular chamber (38, 40), wherein the annular chambers (38, 40) are in hydraulic communication with each other, and comprising a spindle drive (6) for driving the primary piston, wherein the secondary piston (16) indirectly or directly acts on a workpiece to be attacked, **characterized by** a pre-tensioning means (8) for subjecting the cylinder chamber (32) to a pre-tensioning pressure whereby the pressure difference acting in the direction of force buildup is increased.

2. The drive mechanism in accordance with claim 1, **characterized in that** the pre-tensioning means (8) may be added on and deactivated through the intermediary of a pre-tensioning valve (54).

3. The drive mechanism in accordance with claim 1 or 2, **characterized in that** the two annular chambers (38, 40) are in hydraulic communication with each other via a pressure line (42), with an adjusting valve (44) for controlling this hydraulic connection open and closed being arranged in the pressure line.

4. The drive mechanism in accordance with any one of claims 1 to 3, **characterized in that** a path and/or pressure measuring system for detecting a relative position of the primary and secondary pistons (14, 16) and/or for detecting a pressure in the cylinder chamber (32) is provided.

5. The drive mechanism in accordance with any one of the preceding claims, **characterized in that** the cylinder chamber (32) is in hydraulic communication with the annular chamber (38) of the primary unit (10), wherein a displacement valve (48) for controlling this hydraulic connection open or closed is provided.

6. The drive mechanism in accordance with any one of the preceding claims, **characterized in that** the pre-tensioning means (8) is a hydraulic accumulator (50) or a pump.

7. The drive mechanism in accordance with any one of the preceding claims, **characterized in that** a feed pump (56) for supplying the hydraulic accumulator (50) is provided, which is adapted to be driven by the secondary piston (16).

8. The drive mechanism in accordance with claim 7, **characterized in that** a pressure at the secondary piston (16) acts via a spring on a plunger piston (58) of the feed pump (56).

9. The drive mechanism in accordance with any one of the preceding claims, **characterized in that** several spindles (26) are arranged in parallel.

10. The drive mechanism in accordance with any one of the preceding claims, **characterized in that** the cylinder housing (18) of the primary unit (10) is encompassed by the cylinder housing (20) of the secondary unit (12).

11. The drive mechanism in accordance with claim 10, **characterized in that** an end portion (72) of the cylinder housing (18) of the primary unit (10) plunges into a recess (70) of the secondary piston (16).

12. The drive mechanism in accordance with any one of the preceding claims, **characterized in that** the pressure medium is water.

## Revendications

1. Dispositif d'entraînement, en particulier pour une machine à estamper et à grignoter, avec un transmetteur de puissance hydraulique (4) qui comporte une unité primaire (10) et une unité secondaire (12) qui sont conçues avec des pistons différentiels (14, 16) dont les grandes surfaces actives (28, 30) délimitent ensemble un espace cylindrique (32) et dont les petites surfaces actives (34, 36) délimitent chacune un espace annulaire (38, 40), les espaces annulaires (38, 40) étant en communication hydraulique, et avec une commande de broche (6) pour l'entraînement du piston primaire, le piston secondaire (16) agissant indirectement ou directement sur une pièce à traiter, **caractérisé par** un dispositif de précontrainte (8) pour alimenter l'espace cylindrique (32) avec une pression de précontrainte permettant d'augmenter la pression différentielle effective dans le sens de génération de puissance.

2. Dispositif d'entraînement selon la revendication 1, **caractérisé en ce que** le dispositif de précontrainte (8) peut être mis sous tension et hors tension par une soupape de précontrainte (54).

3. Dispositif d'entraînement selon la revendication 1 ou 2, **caractérisé en ce que** les deux espaces annulaires (38, 40) sont en communication hydraulique par l'intermédiaire d'une conduite sous pression (42), une soupape d'ajustage (44) étant disposée dans la conduite sous pression pour commander cette communication hydraulique en ouverture et en fermeture.

4. Dispositif d'entraînement selon l'une quelconque des revendications 1 à 3, **caractérisé en ce qu'**il est prévu un système de mesure de déplacement et/ou de pression pour la détection d'une position relative du piston primaire (14) et du piston secondaire (16) l'un par rapport à l'autre et/ou pour la détection d'une pression dans l'espace cylindrique (32).

5. Dispositif d'entraînement selon l'une quelconque des revendications précédentes, **caractérisé en ce que** l'espace cylindrique (32) est en communication hydraulique avec l'espace annulaire (38) de l'unité primaire (10), une soupape volumétrique (48) étant prévue pour commander cette communication hydraulique en ouverture et en fermeture.

6. Dispositif d'entraînement selon l'une quelconque des revendications précédentes, **caractérisé en ce que** le dispositif de précontrainte (8) est un accumulateur hydraulique (50) ou une pompe.

7. Dispositif d'entraînement selon l'une quelconque des revendications précédentes, **caractérisé en ce que**, pour l'alimentation de l'accumulateur hydraulique (50), il est prévu une pompe de remplissage (56) qui peut être entraînée par le piston secondaire (16).

8. Dispositif d'entraînement selon la revendication 7, **caractérisé en ce qu'**une pression dans le piston secondaire (16) agit sur un piston plongeur (58) de la pompe de remplissage (56) par l'intermédiaire d'un ressort.

9. Dispositif d'entraînement selon l'une quelconque des revendications précédentes, **caractérisé en ce que** plusieurs broches (26) sont montées en parallèle.

10. Dispositif d'entraînement selon l'une quelconque des revendications précédentes, **caractérisé en ce que** le corps de cylindre (18) de l'unité primaire (10) est enveloppé par le corps de cylindre (20) de l'unité secondaire (12).

11. Dispositif d'entraînement selon la revendication 10, **caractérisé en ce qu'**un tronçon d'extrémité (72) du corps de cylindre (18) de l'unité primaire (10) s'enfonce dans un évidement (70) du piston secondaire (16).

12. Dispositif d'entraînement selon l'une quelconque des revendications précédentes, **caractérisé en ce que** le fluide sous pression est de l'eau.
